(19) Europäisches Patentamt
European Patent Office
Office européen des brevets

(11) **EP 4 192 128 A1**

(12) **EUROPEAN PATENT APPLICATION**
published in accordance with Art. 153(4) EPC

(43) Date of publication:
**07.06.2023 Bulletin 2023/23**

(21) Application number: **21850637.6**

(22) Date of filing: **18.02.2021**

(51) International Patent Classification (IPC):
**H04W 52/10** (2009.01)

(52) Cooperative Patent Classification (CPC):
**H04W 52/10**

(86) International application number:
**PCT/JP2021/006149**

(87) International publication number:
**WO 2022/024427 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2020 JP 2020126591**

(71) Applicant: **Panasonic Intellectual Property Corporation**
**of America**
**Torrance, CA 90504 (US)**

(72) Inventors:
• **YAMAMOTO, Tetsuya**
  **Osaka-shi, Osaka 540-6207 (JP)**
• **SUZUKI, Hidetoshi**
  **Osaka-shi, Osaka 540-6207 (JP)**
• **IWAI, Takashi**
  **Osaka-shi, Osaka 540-6207 (JP)**
• **NISHIO,Akihiko**
  **Osaka-shi, Osaka 540-6207 (JP)**
• **HORIUCHI, Ayako**
  **Osaka-shi, Osaka 540-6207 (JP)**
• **YUDA, Yasuaki**
  **Osaka-shi, Osaka 540-6207 (JP)**

(74) Representative: **Grünecker Patent- und**
**Rechtsanwälte**
**PartG mbB**
**Leopoldstraße 4**
**80802 München (DE)**

(54) **TERMINAL AND COMMUNICATION METHOD**

(57)    A terminal is provided with a reception circuit for receiving information from a second node that pertains to the determination of the parameter used for open-loop control for a first node, and a control circuit for exercising open-loop control on the basis of the information.

FIG. 4

**Description**

Technical Field

The present disclosure relates to a terminal and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) can flexibly provide radio communication in response to a wide variety of needs by enhanced mobile broadband (eMBB), massive machine type communication (mMTC), and ultra reliable and low latency communication (URLLC).

The 3rd Generation Partnership Project (3GPP) as an international standardizing body has been specifying New Radio (NR) as one of 5G radio interfaces.

Citation List

Non-Patent Literature

NPL 1
3GPP TS 38.213 V15.9.0, "NR; Physical layer procedure for control (Release 15),"March 2020.

Summary of Invention

Technical Problem

However, there is room for discussion for transmission power control in uplink (UL).

One non-limiting and exemplary embodiment of the present disclosure facilitates providing a terminal and a communication method each capable of improving accuracy of transmission power control in uplink.

A terminal according to an exemplary embodiment of the present disclosure includes: reception circuitry, which, in operation, receives information on determination of a parameter that is used in open loop control for a first node, from a second node; and control circuitry, which, in operation, executes the open loop control, based on the information.

It should be noted that general or specific embodiments may be implemented as a system, a method, an integrated circuit, a computer program, a storage medium, or any selective combination thereof.

According to an exemplary embodiment of the present disclosure, it is possible to improve accuracy of transmission power control in uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of ultra high-density distributed network;
FIG. 2 is a block diagram illustrating an exemplary configuration of a part of a terminal;
FIG. 3 is a block diagram illustrating an exemplary configuration of a base station;
FIG. 4 is a block diagram illustrating an exemplary configuration of the terminal;
FIG. 5 is a flowchart illustrating an exemplary operation of a terminal according to Embodiment 1;
FIG. 6 is a flowchart illustrating an exemplary operation of a terminal according to Embodiment 2;
FIG. 7 is a flowchart illustrating an exemplary operation of a terminal according to Embodiment 3;
FIG. 8 is a flowchart illustrating an exemplary operation of a terminal according to Embodiment 4;

FIG. 9 is a flowchart illustrating an exemplary operation of a terminal according to Embodiment 5;

FIG. 10 illustrates an exemplary architecture of a 3GPP NR system;

FIG. 11 schematically illustrates a functional split between Next Generation - Radio Access Network (NG-RAN) and 5th Generation Core (5GC);

FIG. 12 is a sequence diagram of a Radio Resource Control (RRC) connection setup/reconfiguration procedure;

FIG. 13 schematically illustrates usage scenarios of enhanced Mobile BroadBand (eMBB), massive Machine Type Communications (mMTC), and Ultra Reliable and Low Latency Communications (URLLC); and

FIG. 14 is a block diagram illustrating an exemplary 5G system architecture for a non-roaming scenario.

Description of Embodiments

Hereinafter, embodiments of the present disclosure will be described in detail with reference to the accompanying drawings.

In the future, for example, further growth of 5G or technology development of the 6th generation mobile communication systems (6G) is expected. In NR, for example, in addition to a frequency band of 6 GHz or less, mainly within 700 MHz to 3.5 GHz band (e.g., may be referred to as Frequency Range 1 (FR1)), which has been used for cellular communication, a millimeter-wave band such as 28 GHz or 39 GHz band capable of ensuring a wide band (e.g., may be referred to as FR2) can be utilized. Further, for example, in FR1, a high frequency band is possibly used compared with the frequency band used in Long Term Evolution (LTE) or 3rd Generation mobile communication systems (3G) such as 3.5 GHz band. The higher the frequency band is, the greater a radio wave propagation loss is, and thus, the received quality of radio waves is likely to be deteriorated. Hence, in NR, for example, a method has been studied for ensuring almost the same communication area (or coverage) as to the Radio Access Technology (RAT) such LTE or 3G, in other words, ensuring the appropriate communication when the frequency band higher than that in LTE or 3G is used (e.g., see NPL 2).

In addition, the performance improvement in uplink is expected in order to transmit various kinds of real-time information to a cloud or Artificial Intelligence (AI) on a server according to a trend such as an industrial use case or cyber-physical fusion, for example.

[Ultra High-Density Distributed Network]

For example, enhancement of wireless access network (RAN: Radio Access Network) is expected in order to provide a variety of communication services with different quality requirements, which support mobile traffic continuing to grow in the future.

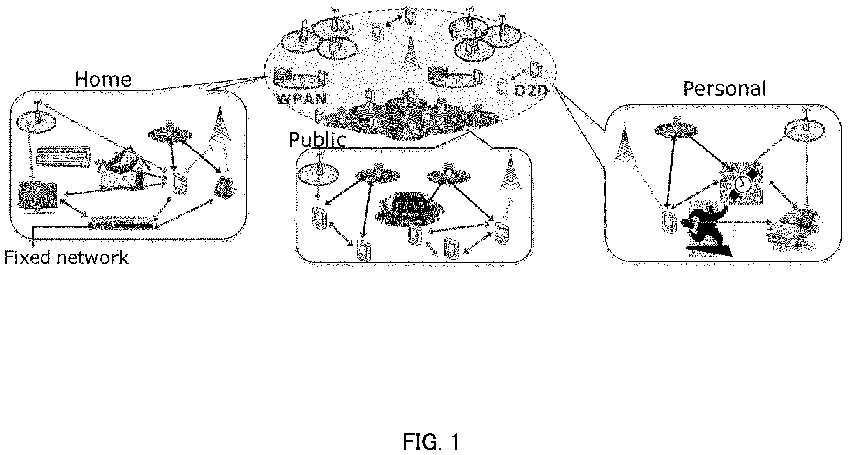

One approach to the enhancement of RAN includes, for example, ultra-density and distributed network of transmission/reception points (e.g., TRP: Transmission and Reception Point) (referred to as "ultra high-density distributed network" or "ultra-density RAN"). FIG. 1 illustrates an example of the ultra high-density distributed network.

In the ultra high-density distributed network, for example, communication at closer distances or an environment with good visibility and forming more communication channels (or transmission/reception points) increase room for selecting a communication channel (or transmission/reception point) and thus improve redundancy, which enables improvement of coverage and communication quality.

Moreover, in the ultra high-density distributed network, for example, in terms expandability and flexibility of a system, it is expected to perform communication by selecting a transmission/reception point or a radio access system suitable for a user rather than which cell (or base station) the user (or terminal) belongs to, such as in cellular network.

For example, transmission powers that can be configured for a base station (also referred to as node, access point, or gNB) and a terminal (or User Equipment (UE), respectively, are different. For this reason, it is also assumed that, for example, an appropriate transmission/reception point for the terminal (or user) differs between downlink (DL) and uplink (UL). Further, for example, an operation is possible in which, in downlink, the terminal receives a signal from a single transmission point (also referred to as Transmission point, Tx point, node, or access point), whereas in uplink, a plurality of reception points (each also referred to as Reception point, Rx point, node, or access point) receives a signal from the terminal.

In addition, in the ultra high-density distributed network, for example, an operation is assumed which is cooperated with a high-frequency band or which is combined with sensing by radio, a wireless power supply, or the like.

In the operation cooperated with the high-frequency band, beam control may be executed, for example. In the beam control, for example, in order for the terminal to select an appropriate beam, a reference signal of each beam (e.g., Channel State Information - Reference Signal (CSI-RS)) may be transmitted from a transmission point. Meanwhile, in the ultra high-density distributed network, for example, suppressing interference between a plurality of transmission points is expected. Here, suppressing the interference by a technical method such as the beam control may complicate an operation of the network; thus, for example, the consideration of not transmitting (or reducing) a reference signal from the transmission point is assumed.

In the operation combined with the wireless sensing, for example, a reception station (e.g., receive-only terminal) having a configuration or function of receiving a signal from a sensor such as an alarm system and having no configuration or function of transmission processing is available for an uplink-dedicated reception point. Incidentally, the absence of a "configuration or function" may include having the "configuration or function" physically but not being in a "available" state (the same applies hereinafter).

Further, in the operation combined with the wireless power supply, for example, the downlink can be utilized for power transmission from the transmission point to the terminal, and the uplink can be utilized for communication. Additionally, for example, there is room for consideration to incorporate a receive-only terminal that receives a broadcast radio wave, such as a TV or radio device, into part of the ultra high-density distributed network by utilizing the receive-only terminal for the communication as an uplink-dedicated reception point.

For example, in uplink transmission, a transmission power control function may be implemented. In transmission power control in uplink, for example, not increasing a transmission power of each terminal above a required value reduces an effect of interference on the same channel or interference between adjacent channels; as a result, frequency-utilization efficiency of the system can be improved. In NR, for example, transmission power control for an uplink shared channel (PUSCH: Physical Uplink Shared Channel) may be achieved by the following Equation 1 (e.g., see NPL 1).
[1]

$$P_{PUSCH}(i, j, q_d, l) =$$
$$\min \left\{ \begin{array}{c} P_{CMAX}, \\ P_{O\_PUSCH}(j) + 10 \log_{10} \left( 2^\mu \cdot M_{RB}^{PUSCH}(i) \right) + \alpha(j) \cdot PL(q_d) + \Delta_{TF}(i) + f(i, l) \end{array} \right\}$$
$$\dots \text{(Equation 1)}$$

In Equation 1, $P_{PUSCH}(i,j,q_d,l)$ represents a transmission power of a PUSCH in transmission occasion i. $P_{CMAX}$ represents the maximum transmission power, and $P_{O\_PUSCH}(j)$ represents a target reception power to be configured for a terminal. Further, $10\log_{10}(2^\mu \cdot M_{RB}^{PUSCH}(i))$ represents a term calculated based on a transmission bandwidth of the PUSCH, $2^\mu$ represents a coefficient by subcarrier spacing (SCS), and $M_{RB}^{PUSCH}(i)$ represents the number of allocated resource blocks (RBs). Further, $\alpha(j)$ represents a correction coefficient of a path loss configured for the terminal, $PL(q_d)$ represents a path loss between the terminal and a base station estimated from a reference signal in downlink, $\Delta_{TF}(i)$ represents a parameter relating to a Modulation and Coding Scheme (MCS) configured for the terminal, and $f(i, l)$ represents a cumulative value of the correction coefficient in closed-loop transmission power control.

Further, in Equation 1, i is an index indicating a transmission occasion of the PUSCH, j is an index indicating a transmission power control parameter set (e.g., $P_{O\_PUSCH}(j)$ and $\alpha(j)$), $q_d$ is an index of a downlink reference signal for path loss estimation, and l is an index indicating a closed-loop transmission power loop process.

As mentioned above, in the ultra high-density distributed network, for example, a case is possible where no reference signal is transmitted from a reception point (e.g., base station, node, or access point) of an uplink signal or where the reception point has no transmission function. In these cases, a terminal may not estimate a path loss between the terminal and the reception point (e.g., base station) that is based on a reference signal in downlink. In such a situation, a transmission power in uplink is not properly controlled in the terminal, which may reduce frequency-utilization efficiency of the transmission quality or the system.

In NR, for example, a plurality of transmission power control parameter sets (e.g., $P_{O\_PUSCH}(j)$ and $\alpha(j)$) can be configured for a terminal (e.g., j = 0, 1, 2, 3, ... , and J-1). Further, in NR, in a Sounding Reference Signal (SRS) Resource Indicator (SRI) field of downlink control information (e.g., DCI) for scheduling uplink data transmission, a transmission power control parameter set j that is used by the terminal can be dynamically indicated to the terminal, for example.

When it is difficult to estimate, in a terminal, a path loss between the terminal and a reception point, such as a case where no reference signal is transmitted from the reception point of an uplink signal or a case where the reception point has no transmission function, a method of executing transmission power control independent of a path loss is used, for example. This method can be achieved by, in Equation 1, a transmission power control parameter set being configured for the terminal, which includes at least $\alpha(j)=0$ and by, in an SRI field of the DCI for scheduling the uplink data transmission, an SRI value (e.g., j) being indicated to the terminal, which is associated with the transmission power control parameter set including $\alpha(j)=0$, for example.

However, in the transmission power control independent of the path loss, for example, no compensation is made for a path loss between a terminal and a reception point, which may deteriorate the transmission quality in uplink.

In addition, the above-mentioned switching by the SRI to the transmission power control independent of the path loss is applicable to, for example, a DCI format including an SRI field (e.g., DCI format 0-1) or to DCI in which the SRI field is configured, and may be difficult to apply to uplink transmission scheduled by a DCI format including no SRI field (e.g., DCI format 0-0).

Moreover, for example, in uplink transmission without scheduling by the DCI (e.g., Configured grant (CG) transmission), information on a transmission power control parameter set to be used is included in a higher layer indication that configures the Configured grant transmission. Therefore, in the uplink transmission without scheduling by the DCI, it may be difficult to dynamically perform the switching to the transmission power control independent of the path loss.

Meanwhile, in the ultra high-density distributed network, an appropriate reception point may be dynamically selected, for example. Thus, for example, in determining a transmission power control parameter set based on an SRI, an uplink transmission power may not be appropriately controlled, which may reduce the transmission quality or the frequency-utilization efficiency of the system.

In one non-limiting and exemplary embodiment of the present disclosure, for example, a description will be given of a method of compensating for a path loss between a terminal and a reception point (e.g., base station) to improve the accuracy of transmission power control.

For example, the terminal may receive information for determining (e.g., calculating) a path loss (or value corresponding to path loss) between a first node and the terminal from a transmission/reception point (e.g., second node) different from and other than a transmission/reception point (or reception point, e.g., first node) to which an uplink signal is transmitted. The terminal may, for example, calculate the path loss between the first node and the terminal, based on the received information, and may execute transmission power control in uplink (e.g., determination of transmission power), based on the calculated path loss.

Thus, for example, in one non-limiting and exemplary embodiment of the present disclosure, when it is difficult to estimate, in a terminal, a path loss between the terminal and a reception point, such as a case where no reference signal is transmitted from the reception point of an uplink signal or a case where the reception point has no transmission function, as assumed in ultra high-density distributed network, the path loss (or value corresponding to path loss) between the terminal and the reception point to which an uplink signal is transmitted can be estimated, and appropriate transmission power control can be executed.

(Embodiment 1)

[Overview of Communication System]

A communication system according to each embodiment of the present disclosure includes base station 100 and terminal 200.

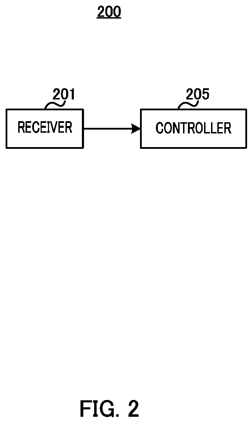

FIG. 2 is a block diagram illustrating an exemplary configuration of a part of terminal 200 according to an exemplary embodiment of the present disclosure. In terminal 200 illustrated in FIG. 2, receiver 201 (e.g., corresponding to reception circuitry) receives information on determination of a parameter (e.g., path loss) that is used in open loop control (e.g., uplink transmission power control) for a first node, from a second node. Controller 205 (e.g., corresponding to control circuitry), executes the closed loop control, based on the information.

[Configuration of Base Station]

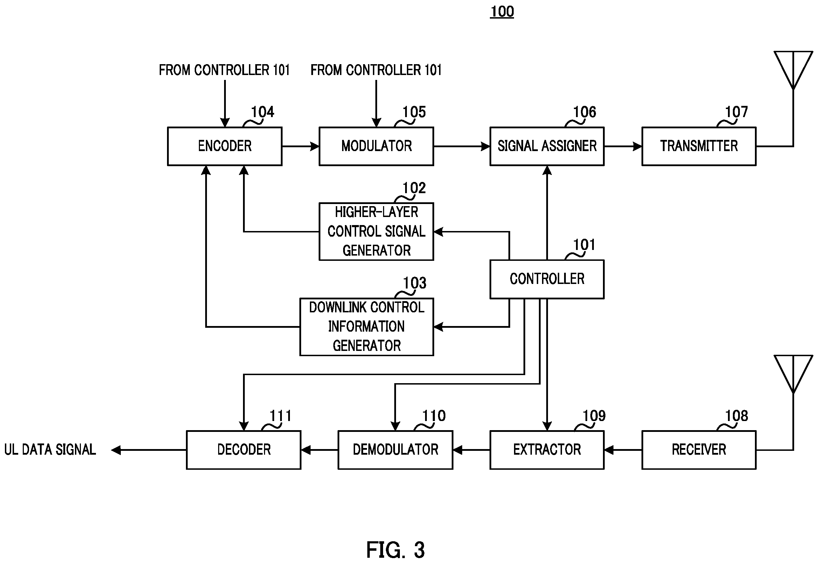

FIG. 3 is a block diagram illustrating an exemplary configuration of base station 100 according to Embodiment 1. In FIG. 3, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, base station 100 may be the "first node" that is a reception point to which an uplink signal is transmitted by terminal 200 or may be the "second node" that is different from the first node.

The "second node" may be, for example, a node capable of transmitting a macrocell base station or a downlink signal. The second node may have a configuration relating to transmission processing (or transmitter) illustrated in FIG. 3 (e.g., controller 101, higher-layer control signal generator 102, downlink control information generator 103, encoder 104, modulator 105, signal assigner 106, and transmitter 107), for example. The second node may also have a configuration relating to reception processing (or receiver) illustrated in FIG. 3 (e.g., receiver 108, extractor 109, demodulator 110, and decoder 111), for example.

On the other hand, the "first node" may be, for example, a node that transmits no reference signal or may be a node in which a reception point has no transmission function. The first node may not have a configuration relating to the transmission processing illustrated in FIG. 3 and may have a configuration relating to the reception processing, for example. The first node may perform processing after the reception processing illustrated in FIG. 3 at the second node or a central processing station (not illustrated) connected to the first node, for example. The first node may be connected with the second node or the central processing station by a wire such as an optical fiber or may be wirelessly connected, for example.

Incidentally, as in the second node, the first node may have the configurations relating to both the transmission processing and the reception processing illustrated in FIG. 3, for example. In a case where the first node is a reception point to which an uplink signal is transmitted by terminal 200, the first node need not transmit a reference signal to terminal 200 transmits the uplink signal, for example.

In FIG. 3, controller 101, for example, determines information on transmission power control in uplink for terminal 200 and outputs the determined information to higher-layer control signal generator 102 or downlink control information generator 103.

The information on the uplink transmission power control to be output to higher-layer control signal generator 102 may include, for example, information on position information of a transmission/reception point or information on a transmission power control parameter set.

The information on the uplink transmission power control to be output to downlink control information generator 103 may include, for example, an SRI value.

Controller 101 also determines information on a downlink signal for transmitting a higher-layer control signal (e.g., RRC signal) or downlink control information (e.g., DCI), for example. The information on the downlink signal may include information such as an encoding and modulation scheme (MCS: Modulation and Coding Scheme) and radio resource allocation. Controller 101, for example, outputs the determined information to encoder 104, modulator 105, and signal assigner 106. In addition, controller 101 outputs information on the downlink signal, such as the higher-layer control signal, to downlink control information generator 103.

Further, controller 101, for example, determines information on an uplink signal (e.g., encoding and modulation scheme (MCS) and radio resource allocation) for terminal 200 to transmit an uplink data signal (e.g., PUSCH), and outputs the determined information to higher-layer control signal generator 102, downlink control information generator 103, extractor 109, demodulator 110, and decoder 111.

Higher-layer control signal generator 102, for example, generates a higher-layer control signal bit string based on information input from controller 101 and outputs the higher-layer control signal bit string to encoder 104. The higher layer control signal may be, for example, cell-specific (i.e., terminal-sharing) broadcast information or UE-specific information.

Downlink control information generator 103, for example, generates a downlink control information (e.g., DCI) bit string based on information input from controller 101 and outputs the generated DCI bit string to encoder 104. Note that, the control information may be transmitted to a plurality of terminals.

Encoder 104, for example, encodes a bit string input from higher-layer control signal generator 102 or a DCI bit string input from downlink control information generator 103, based on information input from controller 101. Encoder 104 outputs the encoded bit string to modulator 105.

Modulator 105, for example, modulates an encoded bit string input from encoder 104, based on information input from controller 101, and outputs the modulated signal (e.g., symbol string) to signal assigner 106.

Signal assigner 106, for example, maps, to a radio resource, a symbol string (including, for example, control signal) input from modulator 105, based on radio resource-indicating information input from controller 101. Signal assigner 106 outputs, to transmitter 107, a downlink signal to which the signal is mapped.

Transmitter 107, for example, performs transmission-waveform generation processing such as orthogonal Frequency Division Multiplexing (OFDM) on a signal input from signal assigner 106. In addition, in the case of, for example, an OFDM transmission in which a cyclic prefix (CP) is added, transmitter 107 performs Inverse Fast Fourier Transform (IFFT) processing on a signal, and adds the CP to the signal resulting from the IFFT. Moreover, transmitter 107 performs RF processing such as D/A conversion or up-conversion on a signal, and transmits the resulting radio signal to terminal 200 via an antenna.

Receiver 108, for example, performs RF processing such as down-conversion or A/D conversion on an uplink signal received from terminal 200 via the antenna. Further, in the case of the OFDM transmission, receiver 108 performs Fast Fourier Transform (FFT) processing on a received signal, and outputs the resulting frequency-domain signal to extractor 109.

Extractor 109, for example, extracts a radio resource part with which an uplink signal (e.g., PUSCH) to be transmitted by terminal 200 is transmitted based on information input from controller 101, and outputs the extracted radio resource part to demodulator 110.

Demodulator 110, for example, demodulates an uplink signal (e.g., PUSCH) input from extractor 109 based on information input from controller 101. Demodulator 110, for example, outputs a demodulation result to decoder 111.

Decoder 111, for example, performs error correction decoding on an uplink signal (e.g., PUSCH) based on information input from controller 101 and a demodulation result input from demodulator 110 to obtain a reception bit sequence (e.g., UL data signal) after decoding.

[Configuration of Terminal]

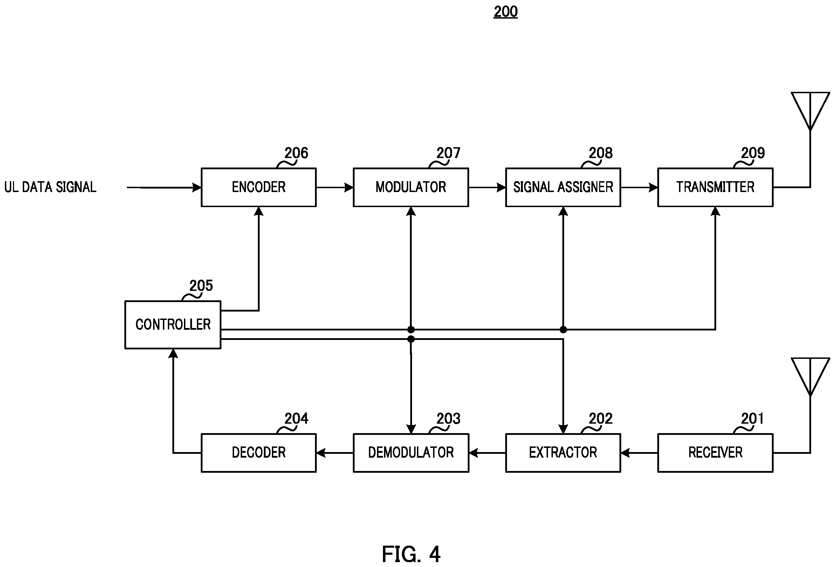

FIG. 4 is a block diagram illustrating an exemplary configuration of terminal 200 according to an exemplary embodiment of the present disclosure. For example, in FIG. 4, terminal 200 includes receiver 201, extractor 202, demodulator 203, decoder 204, controller 205, encoder 206, modulator 207, signal assigner 208, and transmitter 209.

Receiver 201, for example, receives a downlink signal (e.g., higher control signal or downlink control information) from base station 100 via an antenna, performs the RF processing such as the down-conversion or the A/D conversion on the received radio signal to obtain a received signal (baseband signal). Further, in the case of receiving an OFDM signal, receiver 201 performs the FFT processing on the received signal to convert the received signal into that in the frequency domain. Receiver 201 outputs the received signal to extractor 202.

Extractor 202, for example, extracts a radio resource part, which may include downlink control information, from a received signal input from receiver 201 based on information on a radio resource in downlink control information input from controller 205, and outputs the radio resource part to demodulator 203. Further, extractor 202 extracts a radio resource part which includes the higher control signal based on information on a radio resource for a data signal input from controller 205, and outputs the radio resource part to demodulator 203.

Demodulator 203, for example, based on the information input from controller 205, demodulates a signal input from extractor 202 and outputs a demodulation result to decoder 204.

Decoder 204, for example, performs error correction decoding on a demodulation result input from demodulator 203 to obtain, for example, a higher-layer control signal or downlink control information. Decoder 204 outputs the higher-layer control signal and the downlink control information to controller 205.

Controller 205, for example, determines a radio resource for downlink reception, based on the information (e.g., MCS and radio resource allocation) on the downlink signal (e.g., higher layer control signals and downlink control information), which is obtained from the signal input from decoder 204. Controller 205 outputs the determined information to, for example, extractor 202 and demodulator 203.

Controller 205, for example, also determines a radio resource for uplink transmission, based on the information (e.g., MCS and radio resource allocation) on the uplink data, which is obtained from the signal input from decoder 204. Controller 205 outputs the determined information to, for example, encoder 206, modulator 207, and signal assigner 208.

Further, controller 205, for example, determines a transmission power in uplink based on the information on the transmission power control in uplink, which is obtained from the higher layer control signal and the downlink control information, and outputs the determined information to transmitter 209.

Encoder 206, for example, based on the information input from controller 205, encodes an uplink signal (e.g., uplink data signal) and outputs the encoded bit string to modulator 207.

Modulator 207, for example, based on the information input from controller 205, modulates an encoded bit string input from encoder 206 and outputs the modulated signal (symbol string) to signal assigner 208.

Signal assigner 208, for example, maps a signal input from modulator 207 to a radio resource based on information input from controller 205, and outputs an uplink signal to which the signal is mapped to transmitter 209.

Transmitter 209, for example, performs the transmission-waveform generation processing such as the OFDM on a signal input from signal assigner 208. In addition, in the case of, for example, the OFDM transmission using the CP, transmitter 209 performs the IFFT processing on a signal, and adds the CP to the signal resulting from the IFFT. Alternatively, when transmitter 209 generates a single-carrier waveform, for example, a Discrete Fourier Transformer (DFT) may be additionally provided at a rear stage of modulator 207 or a front stage of signal assigner 208 (neither is illustrated). Moreover, transmitter 209, for example, performs the RF processing such as the D/A conversion or the up-conversion on a transmission signal, and transmits the resulting radio signal to base station 100 via the antenna.

Moreover, transmitter 209 may transmit the radio signal to base station 100, based on information on the transmission power input from controller 205.

[Exemplary Operations of Base Station 100 and Terminal 200]

Exemplary operations of base station 100 and terminal 200 having the above configurations will be described.

In the present embodiment, for example, terminal 200 may calculate a path loss between terminal 200 and a reception point (e.g., first node), based on a distance between a position of terminal 200 and a position of the reception point. Further, terminal 200 may determine a transmission power in uplink based on the calculated path loss, for example.

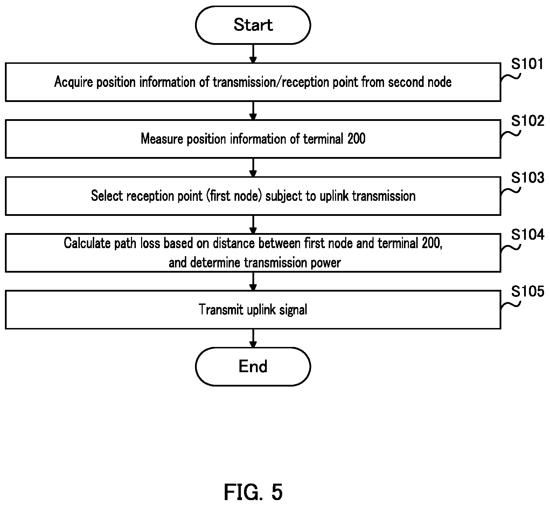

FIG. 5 is a flowchart illustrating an exemplary operation related to transmission of an uplink signal in terminal 200 according to the present embodiment.

For example, the second node indicates, to terminal 200, position information (e.g., latitude and longitude) of a transmission/reception point, and terminal 200 may acquire the position information of the transmission/reception point from the second node (S101).

The position information of the transmission/reception point may include, for example, position information of the first node. For example, the second node may indicate, to terminal 200, position information of a node (e.g., transmission/reception point) included in a management cell (or area) including the second node. The indication of the position information may be, for example, an indication by the broadcast information or an indication by a higher layer specific to the terminal.

Terminal 200 may, for example, measure position information of this terminal 200 (S102). The position information of terminal 200 may be, for example, a position estimation value that is estimated based on at least one of the Global Positioning System (GNSS: Global Navigation Satellite System), an observation arrival-time difference (OTDOA: Observed Time Difference Of Arrival) from base station 100, and base station ID (E-CID: Enhanced Cell ID) using a signal level and a movement-time estimation value.

In FIG.5, the processing in S101 (acquisition of position information of transmission/reception point) and the processing in S 102 (measurement of position information of terminal 200) may be performed in the opposite order or may be performed in parallel.

For example, among a plurality of reception points (or, transmission/reception points), terminal 200 may select a reception point subject to uplink transmission (e.g., first node) (S103). For example, terminal 200 may select the reception point subject to the uplink transmission (e.g., first node), based on the position information of terminal 200 and the position information of the transmission/reception points. For example, among the plurality of reception points (or, transmission/reception points), terminal 200 may determine a reception point that is closer (e.g., closest) to terminal 200 as the reception point subject to the uplink transmission. Further, the reception point subj ect to the uplink transmission may be indicated to terminal 200 from the second node.

Terminal 200 may, for example, calculate (or estimate) a path loss between terminal 200 and the selected reception point, based on a distance between the reception point and terminal 200, and determine a transmission power in uplink, based on the calculated path loss (S104).

For example, in the transmission power control of NR expressed by Equation 1, terminal 200 may determine the transmission power in uplink by replacing path loss $PL(q_d)$ between the terminal and the base station, which is estimated from a reference signal in downlink, with $PL = function(r_n)$. Here, $r_n$ represents the distance between the selected reception point and terminal 200, and function (x) is a function with x as a parameter. For example, the larger the value of $r_n$ is (i.e., the longer the distance between the reception point and terminal 200 is), the larger the value of $function(r_n)$ is, and the larger the path loss may be configured.

Terminal 200 may transmit an uplink signal based on the determined transmission power in uplink (S105). The transmission of the uplink signal may be, for example, the uplink transmission scheduled by the DCI or the Configured grant transmission.

The exemplary operation of terminal 200 has been described thus far.

In the present embodiment, terminal 200 receives information (e.g., position information of first node) on determination of a path loss used for uplink transmission power control for the first node (e.g., parameter used in open loop control) from the second node that is different from the first node, and executes, based on the position information, transmission power control (i.e., open loop control) for an uplink signal to be transmitted to the first node. For example, terminal 200 calculates the path loss between the first node and terminal 200, based on a distance between the position of the reception point selected by terminal 200 and the position of this terminal 200, and thereby executes the transmission power control based on the path loss.

This allows, in the present embodiment, transmission of an uplink signal with an appropriate transmission power based on a path loss even when it is difficult for terminal 200 to estimate the path loss, based on the reference signal in downlink, such as a case where no reference signal is transmitted from the reception point of the uplink signal or a case where the reception point has no transmission function. In other words, even when the path loss estimation based on the reference signal is not performed, terminal 200 can improve the transmission quality in uplink by the transmission power control compensating for the path loss between terminal 200 and the reception point.

Thus, according to the present embodiment, for example, it is possible to improve the accuracy of transmission power control in uplink by compensating for the path loss between terminal 200 and the reception point.

In addition, in the present embodiment, terminal 200 can execute the transmission power control compensating for the path loss between terminal 200 and the first node, independent of a DCI format (e.g., with or without SRI field) or scheduling of uplink transmission (e.g., DCI or Configured grant), for example.

Further, according to the present embodiment, for example, even when a reception point is dynamically selected in the ultra high-density distributed network, terminal 200 can dynamically control the uplink transmission power according to the selected reception point, by calculating a path loss based on the distance between the position of the selected reception point and the position of terminal 200, for example.

(Embodiment 2)

Configurations of base station 100 and terminal 200 according to the present embodiment may be, for example, the same as the configurations in Embodiment 1.

In Embodiment 1, for example, the case has been described where terminal 200 calculates a path loss based on a distance (i.e., positional relation) between the selected reception point and terminal 200 and thereby determines a transmission power in uplink.

Here, in uplink, an operation is possible in which a plurality of reception points receives a signal from terminal 200. This operation is expected to, for example, improve the transmission quality through a reception diversity effect. In this case, for example, the plurality of reception points each may receive a signal from terminal 200 and may demodulate and decode a combined signal of the signals received by the respective reception points.

Therefore, from the viewpoint of received quality after the combination (e.g., Signal-to-Noise power Ratio (SNR) or Signal-to-Interference+Noise power Ratio (SINR)), the transmission power control based on the path loss calculated according to the distance in between with the reception point having the closest distance to terminal 200 may not be suitable transmission power control in the operation using the plurality of reception points. In other words, in the transmission power control based on a distance between terminal 200 and a reception point, an improvement of the transmission quality by the combination in the plurality of reception points is not be considered in some cases.

In one example, when a received SINR after the combination is excessively larger than the target SINR, suppressing a transmission power may reduce an effect of interference due to an uplink signal and improve the frequency-utilization efficiency of the system.

Here, the network can measure a distribution of an SINR and user throughput in a cell or an area, based on, for example, information such as a history of position information of a plurality of terminals 200 or a quality history of an uplink signal in the cell or the area. It may also be discussed that these pieces of information are analyzed utilizing big data or AI, for example.

In the present embodiment, terminal 200 may, for example, calculate a path loss between terminal 200 and a reception point based on position information of terminal 200 and information on an SINR distribution corresponding the position information, and may determine a transmission power in uplink based on the calculated path loss.

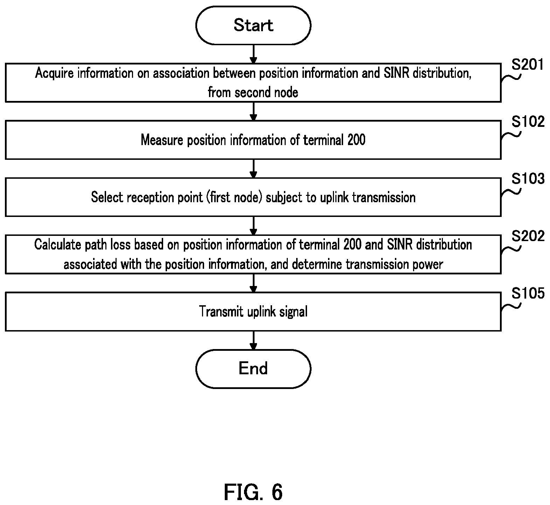

FIG. 6 is a flowchart illustrating an exemplary operation related to transmission of an uplink signal in terminal 200 according to the present embodiment. Incidentally, in FIG. 6, the same operations as in Embodiment 1 are given the same reference numerals.

For example, the second node may indicate, to terminal 200, information on an association between position information in a cell or an area and an SINR distribution. Terminal 200 may acquire the information on the association between the position information and the SINR distribution from the second node (S201).

The indication of the information on the association between the position information and the SINR distribution may be, for example, an indication by broadcast information or an indication by a higher layer specific to the terminal. For example, a higher layer signaling (e.g., information on uplink transmission power control) from the second node (e.g., base station 100) may include the information on the association between the position information and the SINR distribution or information on a transmission power control parameter set.

Terminal 200 may, for example, measure position information of this terminal 200 (S102).

Incidentally, in FIG. 6, the processing in S201 (acquisition of information on association between position information and SINR distribution) and the processing in S 102 (measurement of position information of terminal 200) may be performed in the opposite order or may be performed in parallel.

For example, among a plurality of reception points (or, transmission/reception points), terminal 200 may select at least one reception point subject to uplink transmission (e.g., first node) (S103). For example, terminal 200 may select a reception point subject to the uplink transmission (e.g., first node), based on the position information of terminal 200 and the position information of the transmission/reception points. In one example, terminal 200 may determine a plurality of reception points subject to the uplink transmission in the order from a reception point that is closer (e.g., closest) to terminal 200. Further, the plurality of reception points subject to the uplink transmission may be indicated to terminal 200 from the second node.

Terminal 200 may, for example, calculate (or estimate) a path loss between terminal 200 and the selected reception point, based on the position information of terminal 200 and the SINR distribution associated with the position information, and determine a transmission power in uplink based on the calculated path loss (S202).

For example, in the transmission power control of NR expressed by Equation 1, terminal 200 may determine the transmission power in uplink by replacing path loss $PL(q_d)$ between the terminal and the base station, which is estimated from a reference signal in downlink, with $PL=function(SINR_p)$. Here, $SINR_p$ represents an SINR value associated position p of terminal 200, and function (x) is a function with x as a parameter. For example, the larger the value $SINR_p$ is (i.e., the better the communication quality between reception point and terminal 200 is), the smaller the value of $function(SINR_p)$ is, and the smaller the path loss may be configured.

Terminal 200 may transmit an uplink signal based on the determined transmission power in uplink (S105). The transmission of the uplink signal may be, for example, the uplink transmission scheduled by the DCI or the Configured grant transmission.

The exemplary operation of terminal 200 has been described thus far.

In the present embodiment, terminal 200 receives information (e.g., information on association between position information and received quality) on determination of a path loss used for uplink transmission power control for the first node (e.g., parameter used in open loop control) from the second node that is different from the first node, and executes, based on the received information, transmission power control (i.e., open loop control) for an uplink signal to be transmitted to the first node. For example, terminal 200 calculates the path loss based on received quality (e.g., SINR) associated with the position of terminal 200 and thereby executes the transmission power control based on the path loss.

This allows, in the present embodiment, transmission of an uplink signal with an appropriate transmission power based on a path loss even when it is difficult for terminal 200 to estimate the path loss, based on the reference signal in downlink, such as a case where no reference signal is transmitted from the reception point of the uplink signal or a case where the reception point has no transmission function.

In addition, in the present embodiment, as with Embodiment 1, terminal 200 can execute the transmission power control compensating for the path loss between terminal 200 and the first node, independent of a DCI format (e.g., with or without SRI field) or scheduling of uplink transmission (e.g., DCI or Configured grant), for example. Further, as with Embodiment 1, for example, even when a reception point is dynamically selected in the ultra high-density distributed network, terminal 200 can dynamically control the uplink transmission power according to the selected reception point, by calculating a path loss based on the distance between the position of the selected reception point and the position of terminal 200.

Meanwhile, according to the present embodiment, even when there is a plurality of reception points to which terminal 200 transmits an uplink signal, a path loss can be calculated based on the position information of terminal 200 regardless of the positions of the plurality of reception points, and thus, a transmission power in uplink can be appropriately determined.

(Variation 1 of Embodiment 2)

In the present embodiment, the second node may indicate, to terminal 200, in addition to the information on the association between the position information and the SINR distribution, position information of a transmission/reception point as in Embodiment 1. The position information of the transmission/reception point may include, for example, position information of the first node.

In this case, for example, in the transmission power control of NR expressed by Equation 1, terminal 200 may determine the transmission power in uplink by replacing path loss $PL(q_d)$ between terminal 200 and base station 100, which is estimated from a reference signal in downlink, with $PL=\text{function}(SINR_p, r_n)$. Here, $r_n$ represents the distance between the reception point and terminal 200, and function $(x, y)$ is a function with $x$ and $y$ as parameters.

Incidentally, when a plurality of reception points is included, $r_n$ may indicate the distance in between with the reception point having the closest distance to terminal 200, the distance in between with the reception point having the farthest distance to terminal 200, or the mean value of the distances between terminal 200 and the respective reception points.

In addition, for example, in the function of function $(SINR_p, r_n)$, $SINR_p$ and $r_n$ may be weighted respectively.

(Variation 2 of Embodiment 2)

In the present embodiment, a description has been given of the transmission power control on the basis of the path loss calculated based on the association between the position information and the SINR distribution, but the parameter used for path loss calculation is not limited to the association between the position information and the SINR distribution.

The parameter used for the path loss calculation may be, for example, a parameter with which the distances, positions, or qualities of terminal 200 and a reception point can be calculated or estimated. For example, a path loss may be calculated based on one of or a combination of a Service Set Identifier (SSID) of WiFi (registered trademark) or signal intensity of the SSID, Bluetooth (registered trademark) signal detection and a Bluetooth signal intensity, a measurement result with Light detection and Ranging (LiDAR), video information with a camera or a video, sensing information, power of wireless power supply, timing information in a reception point, or statistical information such as information on an orientation of an array antenna.

In one example, a case of combining the SSID of WiFi and the Bluetooth signal intensity will be described. In this case, terminal 200 may, for example, determine a transmission power in uplink by replacing path loss $PL(q_d)$ between terminal 200 and base station 100, which is estimated from a reference signal in downlink, with $PL=\text{function}(RSRP_{SSID\_x}, RSRP_{Bluetooth})$. Here, $RSRP_{SSID\_x}$ represents the signal intensity of the SSID x (e.g., RSRP: Reference Signals Received Power), $RSRP_{Bluetooth}$ represents the signal intensity (e.g., RSRP) of a Bluetooth signal, and function $(x, y)$ is a function with $x$ and $y$ as parameters.

For example, the larger $RSRP_{SSID\_x}$ or $RSRP_{Bluetooth}$ is, the smaller the value of function($RSRP_{SSID\_x}$, $RSRP_{Bluetooth}$) is, and the smaller the value of path loss PL may be configured. In addition, for example, in PL=function($RSRP_{SSID\_x}$, $RSRP_{Bluetooth}$), $RSRP_{SSID\_x}$ and $RSRP_{Bluetooth}$ may be weighted.

The variations of Embodiment 2 have been each described thus far.

Incidentally, in Embodiment 1 and Embodiment 2, an open-loop transmission power control parameter different from and other than path loss PL (e.g., transmission power control parameter set $P_{O\_PUSCH}(j)$ and $\alpha(j)$) may be a value that is set in advance to terminal 200. Alternatively, the transmission power control parameter set may be, for example, a value that is set in association with one or more of the position information of terminal 200, the selected reception point, the distance between terminal 200 and the reception point, or the SINR value. Similarly, $P_{CMAX}$ may be, for example, a value that is set in association with one or more of the position information of terminal 200, the selected reception point, the distance between terminal 200 and the reception point, or the SINR value (e.g., each different value).

Thus, in terminal 200, transmission power control suitable for the type of reception point can be achieved, for example.

Further, in Embodiment 1 and Embodiment 2, terminal 200 may, for example, transmit an uplink signal with a value of timing advance (TA) as a value that is set in association with one or more of the position information of the transmission power control parameter set and terminal 200, the selected reception point, the distance between terminal 200 and the reception point, and the SINR value.

(Embodiment 3)

Configurations of base station 100 and terminal 200 according to the present embodiment may be, for example, the same as the configurations in Embodiment 1.

In the present embodiment, a description will be given of a method for executing transmission power control that is independent of a reference signal and position information, in a case where position information of the first node or information on an association between the position information and an SINR distribution is not transmitted from the second node to terminal 200, or a case where terminal 200 acquires no position information of terminal 200.

Terminal 200 may, for example, transmit a Random Access Channel (RACH) to the base station at a certain timing. An example of the certain timing includes, in NR, an initial access timing (e.g., transition from RRC_IDLE state to RRC_CONNECTED state), a case of returning from an RRC_INACTIVE state to the RRC_CONNECTED state, a case where downlink data or uplink data occurs during connection (when uplink synchronization state is "non-synchronized" in RRC_CONNECTED state), a case of requesting on-demand System Information (SI), a case of recovering from a beam-connection failure (Beam failure recovery),or the like.

Transmitting the RACH attempts connection from terminal 200 to base station 100 or re-synchronization establishment, for example. By way of example, a series of operations performed for the connection from terminal 200 to base station 100 or the re-synchronization establishment may be referred to as a "random access procedure." In NR, for example, the random access procedure may include four steps (Step 1 to 4) (see, e.g., NPL 1).

<Step 1 (Message 1 transmission)>

Terminal 200 may, for example, randomly select an RACH preamble resource used by terminal 200, from a candidate group for the RACH preamble resource. The candidate group for the RACH preamble resource may be specified by, for example, a combination of a time resource, a frequency resource, and a sequence resource. Terminal 200 may transmit a RACH preamble using the selected RACH preamble resource. The RACH preamble is sometimes referred to as a "Message 1," for example.

<Step 2 (Message 2 transmission)>

Upon detecting the RACH preamble, base station 100 may, for example, transmit a RACH response (RAR: Random Access Response). The RAR is sometimes referred to as "Message 2," for example. At the time of Step 2, base station 100 is difficult to identify terminal 200 that has transmitted the RACH preamble, for example. For this reason, the RAR may be transmitted to, for example, the entirety of a cell covered by base station 100. The RAR may include, for example, information on a resource used by terminal 200 in uplink (e.g., Message 3 transmission in Step 3) or information on a transmission timing in uplink by terminal 200.

For example, when terminal 200 that has transmitted the RACH preamble receives no RAR within a predetermined period (RAR reception window) after the transmission timing of the RACH preamble, the terminal may re-select an RACH preamble resource and re-transmit the RACH preamble (Message 1 re-transmission).

<Step 3 (Message 3 transmission)>

Terminal 200 may, for example, transmit a message including an RRC connection request or a schedule request (e.g., referred to as Message 3) by using the uplink resource indicated from base station 100 by the RAR.

<Step 4 (Message 4 transmission)>

Base station 100 may, for example, transmit, to terminal 200, a message including a UE-ID (e.g., Cell-Radio Network Temporary Identifier (C-RNTI) or Temporary C-RNTI) for identifying terminal 200 (e.g., referred to as Message 4) so as to confirm that a plurality of terminals 200 is not in contention (contention resolution).

The steps in the random access procedure have been each described thus far. Note that, in the above-mentioned random access procedure, the transmission of the PRACH preamble in Step 1 and the transmission of Message 3 in Step 3 may be combined into Step 1 (Message A transmission), and the reception of the RAR in Step 2 and the reception of Message 4 may be combined into Step 2 (Message B reception), thereby performing the random access procedure in the two steps.

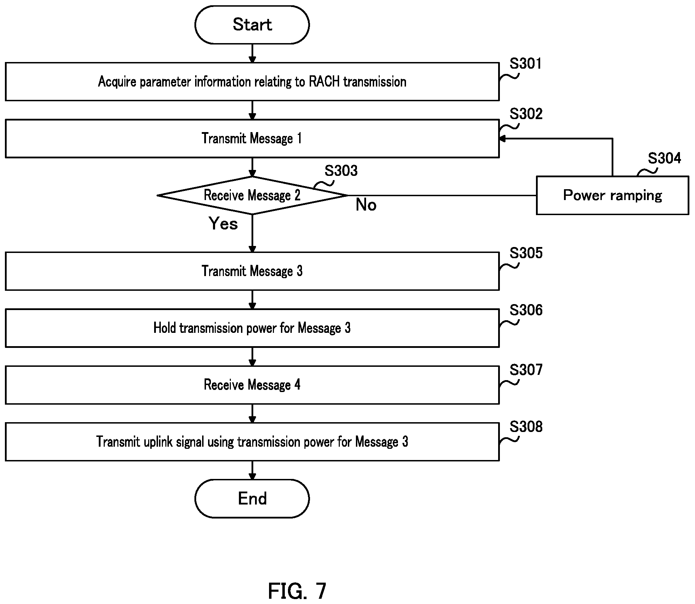

FIG. 7 is a flowchart illustrating an exemplary operation related to transmission of an uplink signal in terminal 200 according to the present embodiment.

For example, terminal 200 may acquire information including a parameter relating to RACH transmission (S301). Here, when uplink transmission in an initial access (e.g., transmission of Message 1 or Message 3) is performed via the first node, it is assumed that a transmission power for initial transmission of Message 1 by terminal 200 is configured to be a smaller value (e.g., value equal to or less than threshold value). This transmission power control can suppress an effect of the interference.

Terminal 200 may, for example, transmit Message 1 with the transmission power configured based on the parameter relating to the RACH transmission (S302).

Terminal 200 may, for example, wait for reception of Message 2 after transmitting Message 1 (S303). Here, Message 2 may be transmitted from, for example, the second node. When not receiving Message 2 within a fixed time after the transmission of Message 1 (S303: No), terminal 200 may increase a transmission power (i.e., Power ramping) as compared to the previous Message 1 transmission (S304). Terminal 200 may transmit (or re-transmit) Message 1 with the increased transmission power (S302).

When receiving Message 2 (S303: Yes), for example, terminal 200 may transmit Message 3 (S305). For example, terminal 200 may determine a transmission power for Message 3 based on transmission power for Message 1 immediately prior to receiving Message 2 and a transmission power command indicated by Message 2 (e.g., RAR).

Here, since the transmission power for Message 1 is increased by the Power ramping, it is likely that the configuration on a transmission power for Message 1 corresponding to Message 2 received by terminal 200 is a value close to a lower limit value of the transmission power with which the first node can receive Message 1 (i.e., transmission power satisfying required quality). Accordingly, terminal 200 can determine the determined transmission power for Message 3 to be a transmission power (e.g., minimum transmission power) that satisfies the required quality in transmitting uplink transmission via the first node, for example. Therefore, in the present embodiment, terminal 200 may hold information on the transmission power for Message 3, for example (S306).

Terminal 200 receives, for example, Message 4 after transmitting Message 3 (S307).

In response to the reception of Message 4, terminal 200 may, for example, transmit an uplink signal based on the held information on the transmission power for Message 3 (S308). In other words, terminal 200 may apply the transmission power configured for Message 3 to transmission of an uplink signal different from Message 3.

The transmission of the uplink signal to which the transmission power for Message 3 is applied may be, for example, the uplink transmission scheduled by the DCI or the Configured grant transmission.

The exemplary operation of terminal 200 has been described thus far.

In the present embodiment, in a case where terminal 200 transmits Message 3 to the first node and receives Message 4 from the second node in response to the transmission of Message 1, the terminal determines a transmission power for an uplink signal to be transmitted to the first node in response to the reception of Message 4, based on the configuration information on a transmission power for Message 3.

Thus, terminal 200 can execute transmission power control that is independent of a reference signal and based on a propagation environment between the first node and terminal 200, even in a case where terminal 200 does not receive, from the second node, the position information of the first node or the information on the association between the position information and the SINR distribution, or a case where terminal 200 acquires no position information of terminal 200.

In addition, in the present embodiment, terminal 200 executes the transmission power control, based on the transmission power in previous uplink transmission and without relying on the information from base station 100 (or second node), thereby reducing an overhead of the broadcast information or the higher layer indication.

Further, in the present embodiment, as with Embodiment 1, terminal 200 can execute the transmission power control compensating for the path loss between terminal 200 and the first node, independent of a DCI format (e.g., with or without SRI field) or scheduling of uplink transmission (e.g., DCI or Configured grant), for example.

Further, as with Embodiment 1, for example, even when a reception point is dynamically selected in the ultra high-density distributed network, terminal 200 can dynamically control an uplink transmission power based on, for example, the transmission power for Message 3 for the selected reception point (e.g., first node).

Note that, in the present embodiment, a case has been described where terminal 200 determines the transmission power for the uplink signal based on the transmission power for Message 3, but the present disclosure is not limited to this case, and, for example, the transmission power for the uplink signal may be determined based on the transmission power for Message 1 at the time when terminal 200 receives Message 2.

(Embodiment 4)

Configurations of base station 100 and terminal 200 according to the present embodiment may be, for example, the same as the configurations in Embodiment 1.

In the present embodiment, a case will be described where, as in NR, a plurality of candidates (e.g., j = 0, 1, 2, 3, ... , J-1) for a transmission power control parameter set (e.g., $P_{O\_PUSCH}(j)$ and $\alpha(j)$) can be configured for terminal 200. Further, in the present embodiment, for example, a case will also be described where, in the downlink control information for scheduling uplink data transmission (e.g., SRI field of DCI), base station 100 can dynamically indicate, to terminal 200, transmission power control parameter set j used for the uplink data transmission.

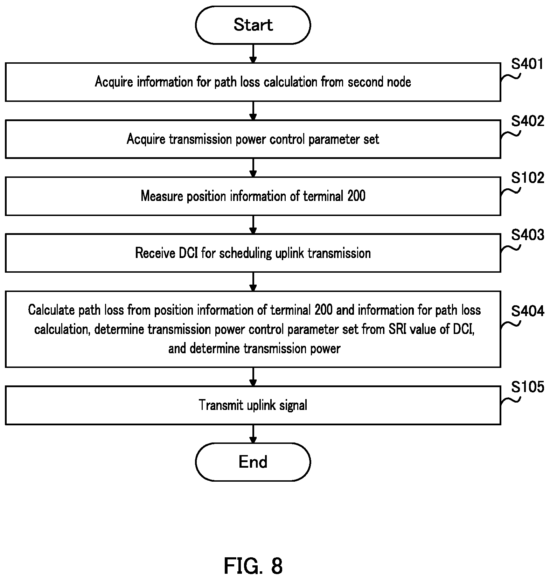

FIG. 8 is a flowchart illustrating an exemplary operation related to transmission of an uplink signal in terminal 200 according to the present embodiment. Incidentally, in FIG. 8, the same operation as in Embodiment 1 is given the same reference numeral.

Terminal 200 may, for example, acquire information on calculation of a path loss between terminal 200 and a reception point, from the second node (S401). The information for the path loss calculation may be, for example, at least one of the information on the distance between terminal 200 and the reception point (e.g., position information of reception point) as in Embodiment 1 and the information on the association between the position information and the SINR distribution as in Embodiment 2.

Terminal 200 may, for example, acquire information on a transmission power control parameter set (S402). The information on the transmission power control parameter set may include, for example, information indicating a candidate (e.g., J pieces) for the transmission power control parameter set.

Terminal 200 may, for example, measure position information of this terminal 200 (S102).

Terminal 200 may, for example, receive DCI for scheduling uplink data transmission (or transmission) (S403). The DCI (e.g., SRI field) may include, for example, information indicating one of a plurality of candidates for the transmission power control parameter set.

Terminal 200 may calculate (or estimate) a path loss between terminal 200 and the reception point, based on the information acquired from the second node and the position information of terminal 200, and then determine a transmission power in uplink based on the transmission power control parameter set configured for terminal 200 and the calculated path loss (S404).

By way of example, terminal 200 may replace path loss $PL(q_d)$ between terminal 200 and base station 100, which is estimated from a reference signal in downlink in the transmission power control in NR (e.g., Equation 1), with path loss PL calculated in Embodiment 1 or Embodiment 2. Further, terminal 200 may configure a parameter different from and other than the PL in the transmission power control in NR (e.g., $P_{CMAX}$, $P_{O\_PUSCH}(j)$, $10\log_{10}(2^{\mu} \cdot M_{RB}^{PUSCH}(i))$, $\alpha(j)$, $\Delta_{TF}(i)$, and f(i, I), in the manner similar to NR.

Terminal 200 may, for example, transmit an uplink signal with the determined transmission power in uplink (S105). Incidentally, the transmission of the uplink signal may be, for example, the uplink transmission scheduled by the DCI or the Configured grant transmission. For example, in the case of Configured grant transmission, the processing in S403 (reception processing of DCI) may be omitted. Further, for example, the transmission power control parameter set (e.g., index j) used by terminal 200 may be previously specified by standards or may be indicated, to terminal 200, by higher layer signaling (e.g., RRC) that configures the Configured grant transmission.

Incidentally, in FIG. 8, the order of the processing in S401 (acquisition of information for path loss calculation), the processing in S402 (acquisition of transmission power control parameter set), and the processing in S 102 (measurement of position information of terminal 200) is not limited to the order illustrated in FIG. 8 and may be in a different order, and these processes may be performed in parallel. Further, in FIG. 8, the processing in S 102 (measurement of position information of terminal 200) may be performed after the processing in S403 (reception of DCI), for example.

According to the present embodiment, terminal 200 receives control information indicating one of the plurality of candidates for the transmission power control parameter set, and executes the transmission power control for the uplink signal for the first node (i.e., open loop control such as configuration on transmission power control parameter set), based on the transmission power control parameter set corresponding to the received control information.

For example, even when it is difficult for terminal 200 to estimate the path loss between terminal 200 and base station 100 from the reference signal, such as in a case where no reference signal is transmitted from the reception point of the uplink signal or a case where the reception point has no transmission function, terminal 200 can calculate the path loss between terminal 200 and the reception point selected by terminal 200 based on Embodiment 1 or 2, for example. In addition, in the present embodiment, for example, the dynamic indication of the DCI (e.g., SRI field) enables terminal 200 to appropriately configure (or optimize) the transmission power control parameter different from and other than path loss(PL).

Therefore, according to the present embodiment, the transmission power parameter for transmission of an uplink signal can be dynamically configured, which improves the transmission quality in uplink.

Incidentally, for example, a plurality of $P_{CMAX}$s may be configured for terminal 200, or $P_{CMAX}$ (e.g., $P_{CMAX}(j)$) may be included in the transmission power control parameter set. This enables terminal 200 to achieve the more appropriate transmission power control according to, for example, the type of reception point.

Meanwhile, for example, terminal 200 may dynamically switch the transmission power for the uplink signal to the transmission power for Message 3 described in Embodiment 3, based on an SRI indication or an instruction included in a DCI field different from and other than the SRI field.

Further, in the present embodiment, the method for calculating the path loss is not limited to the method in Embodiment 1 or in Embodiment 2 and may be other methods.

(Embodiment 5)

Configurations of base station 100 and terminal 200 according to the present embodiment may be, for example, the same as the configurations in Embodiment 1.

For example, in 5G further growth or 6G, a frequency band that can ensure a broader bandwidth (e.g., frequency band of 52.6GHz or higher) and utilization of an unlicensed band (e.g., also referred to as NR-Unlicensed(NR-U)) are expected. In one example, in Japan and Europe, a carrier sense (e.g., LBT: Listen Before Talk), which is one of the interference-avoidance techniques, is specified for equipment using the unlicensed band.

In addition, the higher the frequency band is, the higher the rectilinearity of the radio wave becomes, which makes it difficult for the radio waves to travel far away; thus, for example, "Directional LBT" that combines the beamforming technology and the LBT may be applied.

In the Directional LBT, for example, terminal 200 may perform the LBT for a plurality of beam directions after scheduling uplink transmission and determine to transmit an uplink signal to the beam direction where the LBT is not in Busy. For this reason, the network (e.g., base station 100) is difficult to predict the beam direction to which terminal 200 actually transmits the uplink signal.

Moreover, for example, since it is assumed that an effect of interference in uplink varies with a beam direction, the transmission power control that is not based on the beam direction may not improve the transmission quality and the frequency-utilization efficiency of the system.

Hence, in the present embodiment, for example, a description will be given of a method for controlling a transmission power based on a beam direction in which Directional LBT is performed.

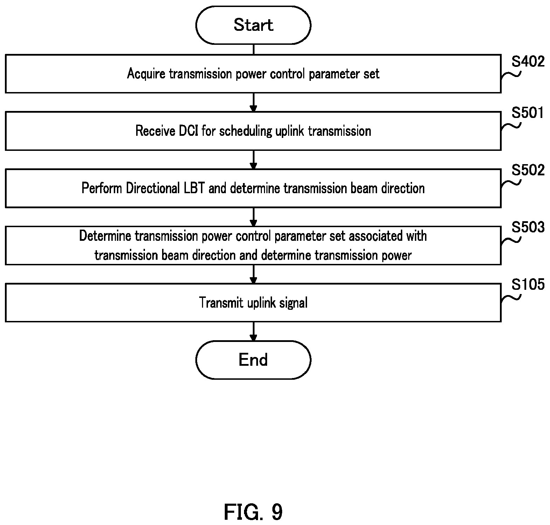

FIG. 9 is a flowchart illustrating an exemplary operation related to transmission of an uplink signal in terminal 200 according to the present embodiment. Incidentally, in FIG. 9, the same operations as in Embodiment 1 and in Embodiment 4 are given the same reference numerals.

Terminal 200 may, for example, acquire information on a transmission power control parameter set (S402). Further, terminal 200 may, for example, receive DCI for scheduling uplink data transmission (or transmission) (S501).

Here, for example, a transmission power control parameter set as in NR (e.g., $P_{O\_PUSCH}(j)$ and $\alpha(j)$) may be configured for each beam direction of the Directional LBT. In other words, the transmission power control parameter sets may be associated with the beam directions of the Directional LBT, respectively. As an example, according to a communication environment in each beam direction (e.g., presence or absence of obstacle, and the like), a transmission power control parameter set corresponding to the beam direction may be configured.

Further, for example, $P_{CMAX}$ may be configured, for terminal 200, for each beam direction of the Directional LBT, or $P_{CMAX}$ may be included in the transmission power control parameter set.

Further, for example, terminal 200 may configure a function for the path loss calculation in Embodiment 1 and Embodiment 2 for each beam direction of the Directional LBT.

In FIG. 9, terminal 200 may, for example, perform the Directional LBT and determine a transmission beam direction for an uplink signal (S502).

Terminal 200 may, for example, determine, among transmission power control parameter sets configurable by terminal 200, a transmission power control parameter set associated with the determined transmission beam direction and then determine a transmission power for the uplink signal (S503).

Terminal 200 may, for example, transmit the uplink signal with the determined transmission power in uplink (S105). Incidentally, the transmission of the uplink signal may be, for example, the uplink transmission scheduled by the DCI or the Configured grant transmission. For example, in the case of Configured grant transmission, the processing in S403 (reception processing of DCI) may be omitted.

According to the present embodiment, when performing the Directional LBT, terminal 200 executes the transmission power control for the uplink signal for the first node (i.e., closed loop control such as configuration on transmission power control parameter set), based on the beam direction applied to the uplink signal.

Thus, in the present embodiment, terminal 200 can execute the transmission power control by using the transmission power control parameter set according to the transmission beam direction for the uplink signal, which improves the transmission quality in uplink.

Note that, in the present embodiment, a value of the timing advance (TA) may be set for each beam direction in which Directional LBT is performed. Terminal 200 may, for example, transmit an uplink signal based on the timing advance value corresponding to the transmission beam direction.

Further, the method for calculating the path loss is not limited to the method in Embodiment 1 or in Embodiment 2 and may be other methods.

The embodiments according to an exemplary embodiment of the present disclosure have been described thus far.

Incidentally, each of the above-described embodiments may be combined. For example, Embodiment 4 and Embodiment 5 may be combined with each other. By way of example, Embodiment 4 may be applied to some configuration of the transmission power control parameter sets, and Embodiment 5 may be applied to other configuration of the transmission power control parameter sets.

Further, in the above-described embodiments, a case has been described where the first node that is the reception point of the uplink signal transmits no reference signal, but the first node may include a configuration or a function for transmitting a reference signal. Transmission power control (e.g., closed loop control) according to an exemplary embodiment of the present disclosure may be applied to, for example, a case where no transmission of a reference signal is made at the first node, but the transmission power control may be applied regardless of the presence or absence of transmission of the reference signal at the first node.

Further, in the embodiments described above, the path loss has been described as an example of the parameter relating to a received quality index in the open loop control, the received quality index is not limited to the path loss.

(Control Signal)

In an exemplary embodiment of the present disclosure, the downlink control signal (or downlink control information) may be, for example, a signal (or information) transmitted at a Physical Downlink Control Channel (PDCCH) in the physical layer, or a signal (or information) transmitted at Medium Access Control (MAC) or Radio Resource Control (RRC) in the higher layer. In addition, the signal (or information) is not limited to a case of being indicated by the downlink control signal and may be previously specified by the specifications (or standards) or may be previously configured in a base station and a terminal.

In an exemplary embodiment of the present disclosure, the uplink control signal (or uplink control information) may be, for example, a signal (or information) transmitted in a PDCCH in the physical layer, or a signal (or information) transmitted in MAC or RRC in the higher layer. In addition, the signal (or information) is not limited to a case of being indicated by the uplink control signal and may be previously specified by the specifications (or standards) or may be previously configured in a base station and a terminal. Further, the uplink control signal may be replaced with, for example, uplink control information (UCI), 1st stage sidelink control information (SCI), or 2nd stage SCI.

(Base Station)

In an exemplary embodiment of the present disclosure, the base station may be a transmission reception point (TRP), a clusterhead, an access point, a remote radio head (RRH), an eNodeB (eNB), a gNodeB (gNB), a base station (BS), a base transceiver station (BTS), a base unit, or a gateway, for example. In addition, in sidelink communication, a terminal may be adopted instead of a base station. Further, instead of a base station, a relay apparatus may be adopted for relaying the communication between a higher node and a terminal.

(Uplink / Downlink / Sidelink)

An exemplary embodiment of the present disclosure may be applied to, for example, any of the uplink, downlink, and sidelink. In one example, an exemplary embodiment of the present disclosure may be applied to a Physical Uplink Shared Channel (PUSCH), a Physical Uplink Control Channel (PUCCH), and a Physical Random Access Channel (PRACH) in uplink, a Physical Downlink Shared Channel (PDSCH), a PDCCH, and a Physical Broadcast Channel (PBCH) in downlink, or a Physical Sidelink Shared Channel (PSSCH), a Physical Sidelink Control Channel (PSCCH), and a Physical Sidelink Broadcast Channel (PSBCH) in sidelink.

The PDCCH, the PDSCH, the PUSCH, and the PUCCH are examples of a downlink control channel, a downlink data channel, an uplink data channel, and an uplink control channel, respectively. Further, the PSCCH and the PSSCH are examples of a side link control channel and a side link data channel, respectively. Further, the PBCH and the PSBCH are examples of a broadcast channel, and the PRACH is an example of a random access channel.

(Data channel / Control channel)

An exemplary embodiment of the present disclosure may be applied to, for example, any of a data channel and a control channel. In one example, a channel in an exemplary embodiment of the present disclosure may be replaced with any of a PDSCH, a PUSCH, and a PSSCH for the data channel, or a PDCCH, a PUCCH, a PBCH, a PSCCH, and a PSBCH for the control channel.

(Reference Signal)

In an exemplary embodiment of the present disclosure, the reference signals are signals known to both a base station and a mobile station and each reference signal may be referred to as a reference signal (RS) or sometimes a pilot signal. Each reference signal may be any of a Demodulation Reference Signal (DMRS); a Channel State Information-Reference Signal (CSI-RS); a Tracking Reference Signal (TRS); a Phase Tracking Reference Signal (PTRS); a Cell-specific Reference Signal (CRS); or a Sounding Reference Signal (SRS).

(Time Interval)

In an exemplary embodiment of the present disclosure, time resource units are not limited to one or a combination of slots and symbols and may be time resource units, such as frames, superframes, subframes, slots, time slot subslots, minislots, or time resource units, such as symbols, orthogonal frequency division multiplexing (OFDM) symbols, single carrier-frequency division multiplexing access (SC-FDMA) symbols, or other time resource units. The number of symbols included in one slot is not limited to any number of symbols exemplified in the embodiments described above and may be other numbers of symbols.

(Frequency Band)

An exemplary embodiment of the present disclosure may be applied to either of a licensed band or an unlicensed band.

(Communication)

An exemplary embodiment of the present disclosure may be applied to any of the communication between a base station and a terminal, the communication between terminals (Sidelink communication, Uu link communication), and the communication for Vehicle to Everything (V2X). In one example, a channel in an exemplary embodiment of the present disclosure may be replaced with any of a PSCCH, a PSSCH, a Physical Sidelink Feedback Channel (PSFCH), a PSBCH, a PDCCH, a PUCCH, a PDSCH, a PUSCH, and a PBCH.

Further, an exemplary embodiment of the present disclosure may be applied to either of terrestrial networks or a non-terrestrial network (NTN) such as communication using a satellite or a high-altitude pseudolite (High Altitude Pseudo Satellite (HAPS)). Further, an exemplary embodiment of the present disclosure may be applied to a terrestrial network having a large transmission delay compared to the symbol length or slot length, such as a network with a large cell size and/or an ultra-wideband transmission network.

(Antenna Port)

In an exemplary embodiment of the present disclosure, an antenna port refers to a logical antenna (antenna group) configured of one or more physical antennae. For example, the antenna port does not necessarily refer to one physical antenna and may refer to an array antenna or the like configured of a plurality of antennae. In one example, the number of physical antennae configuring the antenna port may not be specified, and the antenna port may be specified as the minimum unit with which a terminal station can transmit a Reference signal. Moreover, the antenna port may be specified as the minimum unit for multiplying a weight of a Precoding vector.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

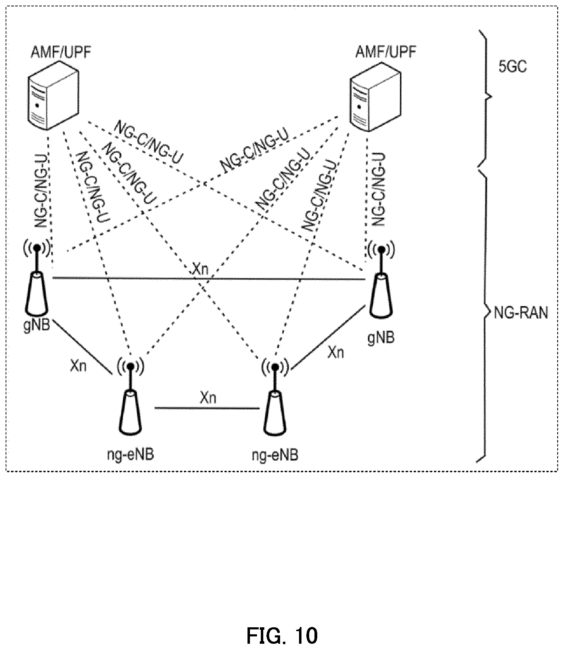

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 10 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). Acontrol plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

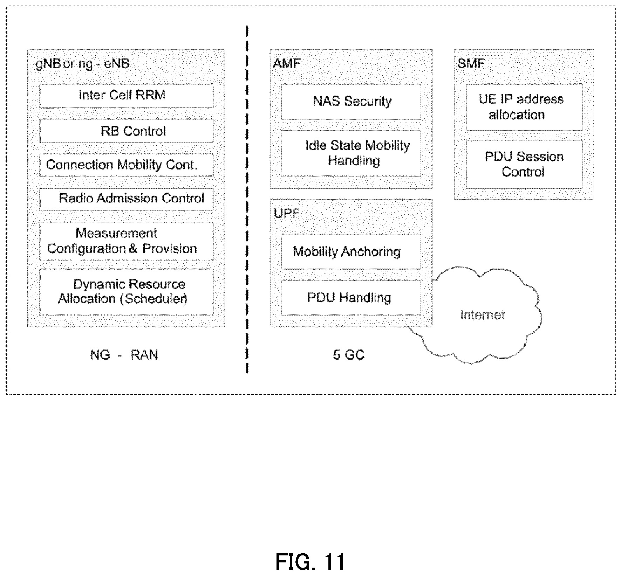

FIG. 11 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a LTE;
- IP header compression, encryption, and integrity protection of data;
- Selection of an AMF during LTE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the

AMF or an operation management maintenance function (OAM: Operation, Admission, Maintenance));

- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode LTE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

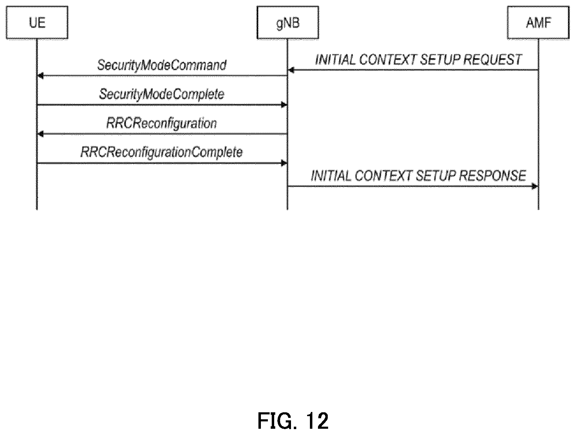

FIG. 12 illustrates some interactions between a UE, gNB, and AMF (a 5GC Entity) performed in the context of a transition of the LTE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the LTE performs an uplink transmission or a downlink reception based on the resource allocation configuration.

<Usage Scenarios of IMT for 2020 and beyond>

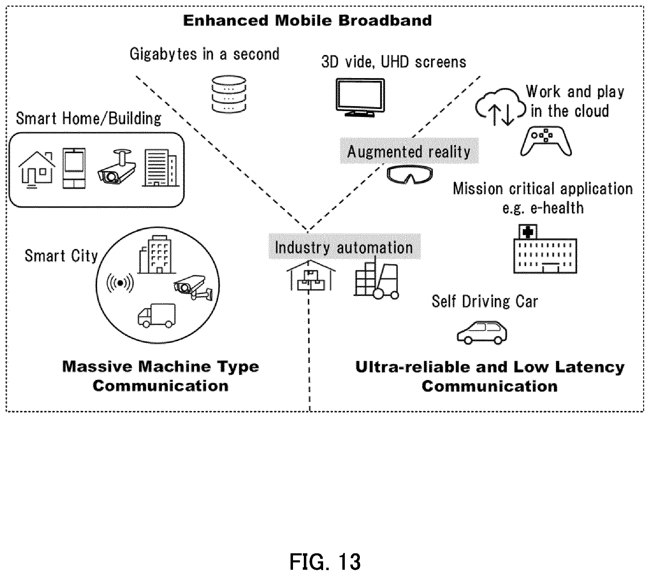

FIG. 13 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 13 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for LTL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few $\mu$s (where the value can be one or a few $\mu$s depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 12. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the LTE and in the 5GC associate LTL and DL packets with QoS Flows, whereas AS-level mapping rules in the LTE and in the NG-RAN associate LTL and DL QoS Flows with DRBs.

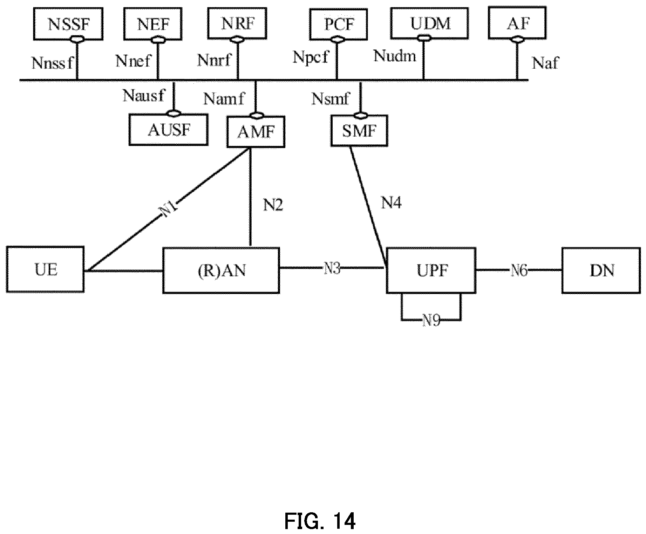

FIG. 14 illustrates a 5G NR non-roaming reference architecture (see TS 23.501 v16.1.0, section 4.23). An Application Function (AF) ( e.g., an external application server hosting 5G services, exemplarily described in FIG. 13) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 14 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: reception circuitry, which, in operation, receives information on determination of a parameter that is used in open loop control for a first node, from a second node; and control circuitry, which, in operation, executes the open loop control, based on the information.

In an exemplary embodiment of the present disclosure, the open loop control is uplink transmission power control for the first node; and the parameter is a parameter relating to a path loss between the terminal and the first node.

In an exemplary embodiment of the present disclosure, the information includes information on a position of the first node; and the control circuitry calculates the path loss, based on a distance between a position of the terminal and the position of the first node, and executes the uplink transmission power control, based on the path loss.

In an exemplary embodiment of the present disclosure, the information includes information on an association between a position and received quality; and the control circuitry calculates, based on the information, the path loss from received quality associated with a position of the terminal and executes the uplink transmission power control, based on the path loss.

In an exemplary embodiment of the present disclosure, the reception circuitry receives control information indicating one of a plurality of candidates for a transmission power control parameter set; and the control circuitry executes closed loop control for the first node, based on a transmission power control parameter set corresponding to the control information.

In an exemplary embodiment of the present disclosure, the control circuitry executes closed loop control for the first node, based on a direction of a beam that is applied to a signal for the first node.

In an exemplary embodiment of the present disclosure, the first node is a node that transmits no reference signal.

A terminal according to an exemplary embodiment of the present disclosure includes: transmission circuitry, which, in operation, transmits a first signal to a first node; and control circuitry, which, in operation, when receiving a second signal from a second node in response to transmission of the first signal, determines a transmission power for a third signal to be transmitted to the first node in response to reception of the second signal, based on configuration information on a transmission power for the first signal.

A communication method according to an exemplary embodiment of the present disclosure includes: receiving, by a terminal, information on determination of a parameter that is used in open loop control for a first node, from a second node; and executing, by the terminal, the open loop control, based on the information.

A communication method according to an exemplary embodiment of the present disclosure includes: transmitting, by a terminal, a first signal to a first node; and determining, by the terminal, when receiving a second signal from a second node in response to transmission of the first signal, a transmission power for a third signal to be transmitted to the first node in response to reception of the second signal, based on configuration information on a transmission power for the first signal.

The disclosure of Japanese Patent Application No. 2020-126591, filed on July 27, 2020, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

   reception circuitry, which, in operation, receives information on determination of a parameter that is used in open loop control for a first node, from a second node; and
   control circuitry, which, in operation, executes the open loop control, based on the information.

2. The terminal according to claim 1, wherein:

   the open loop control is uplink transmission power control for the first node; and
   the parameter is a parameter relating to a path loss between the terminal and the first node.

3. The terminal according to claim 2, wherein:

   the information includes information on a position of the first node; and
   the control circuitry calculates the path loss, based on a distance between a position of the terminal and the position of the first node, and executes the uplink transmission power control, based on the path loss.

4. The terminal according to claim 2, wherein:

   the information includes information on an association between a position and received quality; and
   the control circuitry calculates, based on the information, the path loss from received quality associated with a position of the terminal and executes the uplink transmission power control, based on the path loss.

**5.** The terminal according to claim 1, wherein:

the reception circuitry receives control information indicating one of a plurality of candidates for a transmission power control parameter set; and
the control circuitry executes closed loop control for the first node, based on a transmission power control parameter set corresponding to the control information.

**6.** The terminal according to claim 1, wherein the control circuitry executes closed loop control for the first node, based on a direction of a beam that is applied to a signal for the first node.

**7.** The terminal according to claim 1, wherein the first node is a node that transmits no reference signal.

**8.** A terminal, comprising:

transmission circuitry, which, in operation, transmits a first signal to a first node; and
control circuitry, which, in operation, when receiving a second signal from a second node in response to transmission of the first signal, determines a transmission power for a third signal to be transmitted to the first node in response to reception of the second signal, based on configuration information on a transmission power for the first signal.

**9.** A communication method, comprising:

receiving, by a terminal, information on determination of a parameter that is used in open loop control for a first node, from a second node; and
executing, by the terminal, the open loop control, based on the information.

**10.** A communication method, comprising:

transmitting, by a terminal, a first signal to a first node; and
determining, by the terminal, when receiving a second signal from a second node in response to transmission of the first signal, a transmission power for a third signal to be transmitted to the first node in response to reception of the second signal, based on configuration information on a transmission power for the first signal.

FIG. 1

200

201

RECEIVER →

205

CONTROLLER

FIG. 2

**100**

FROM CONTROLLER 101          FROM CONTROLLER 101

| 104 | 105 | 106 | 107 |
|---|---|---|---|
| ENCODER | MODULATOR | SIGNAL ASSIGNER | TRANSMITTER |

102
HIGHER-LAYER
CONTROL SIGNAL
GENERATOR

101
CONTROLLER

103
DOWNLINK CONTROL
INFORMATION
GENERATOR

| 111 | 110 | 109 | 108 |
|---|---|---|---|
| DECODER | DEMODULATOR | EXTRACTOR | RECEIVER |

UL DATA SIGNAL ←

FIG. 3

FIG. 4

EP 4 192 128 A1

```
                        ┌─────────┐
                        │  Start  │
                        └────┬────┘
                             ↓
┌──────────────────────────────────────────────────────────────┐  S101
│ Acquire position information of transmission/reception point    │
│                    from second node                             │
└──────────────────────────┬───────────────────────────────────┘
                             ↓
┌──────────────────────────────────────────────────────────────┐  S102
│            Measure position information of terminal 200         │
└──────────────────────────┬───────────────────────────────────┘
                             ↓
┌──────────────────────────────────────────────────────────────┐  S103
│    Select reception point (first node) subject to uplink        │
│                         transmission                            │
└──────────────────────────┬───────────────────────────────────┘
                             ↓
┌──────────────────────────────────────────────────────────────┐  S104
│ Calculate path loss based on distance between first node and    │
│    terminal 200, and determine transmission power               │
└──────────────────────────┬───────────────────────────────────┘
                             ↓
┌──────────────────────────────────────────────────────────────┐  S105
│                    Transmit uplink signal                       │
└──────────────────────────┬───────────────────────────────────┘
                             ↓
                        ┌─────────┐
                        │   End   │
                        └─────────┘
```

FIG. 5

```
                              ┌─────────────┐
                              │    Start    │
                              └──────┬──────┘
                                     │
    ┌────────────────────────────────▼────────────────────────────────┐  S201
    │ Acquire information on association between position information and SINR distribution, │
    │                       from second node                          │
    └────────────────────────────────┬────────────────────────────────┘
                                     │
    ┌────────────────────────────────▼────────────────────────────────┐  S102
    │              Measure position information of terminal 200         │
    └────────────────────────────────┬────────────────────────────────┘
                                     │
    ┌────────────────────────────────▼────────────────────────────────┐  S103
    │        Select reception point (first node) subject to uplink transmission        │
    └────────────────────────────────┬────────────────────────────────┘
                                     │
    ┌────────────────────────────────▼────────────────────────────────┐  S202
    │ Calculate path loss based on position information of terminal 200 and SINR distribution │
    │      associated with the position information, and determine transmission power      │
    └────────────────────────────────┬────────────────────────────────┘
                                     │
    ┌────────────────────────────────▼────────────────────────────────┐  S105
    │                      Transmit uplink signal                      │
    └────────────────────────────────┬────────────────────────────────┘
                                     │
                              ┌──────▼──────┐
                              │     End     │
                              └─────────────┘
```

FIG. 6

FIG. 7

```
                    ┌─────────────┐
                    │    Start    │
                    └──────┬──────┘
                           ▼
┌──────────────────────────────────────────────────────────────┐  S401
│   Acquire information for path loss calculation from second node │
└──────────────────────────────┬───────────────────────────────┘
                               ▼
┌──────────────────────────────────────────────────────────────┐  S402
│          Acquire transmission power control parameter set        │
└──────────────────────────────┬───────────────────────────────┘
                               ▼
┌──────────────────────────────────────────────────────────────┐  S102
│            Measure position information of terminal 200          │
└──────────────────────────────┬───────────────────────────────┘
                               ▼
┌──────────────────────────────────────────────────────────────┐  S403
│          Receive DCI for scheduling uplink transmission          │
└──────────────────────────────┬───────────────────────────────┘
                               ▼
┌──────────────────────────────────────────────────────────────┐  S404
│ Calculate path loss from position information of terminal 200 and information for path loss │
│ calculation, determine transmission power control parameter set from SRI value of DCI, │
│               and determine transmission power                   │
└──────────────────────────────┬───────────────────────────────┘
                               ▼
┌──────────────────────────────────────────────────────────────┐  S105
│                    Transmit uplink signal                        │
└──────────────────────────────┬───────────────────────────────┘
                               ▼
                    ┌─────────────┐
                    │     End     │
                    └─────────────┘
```

FIG. 8

Start

S402 — Acquire transmission power control parameter set

S501 — Receive DCI for scheduling uplink transmission

S502 — Perform Directional LBT and determine transmission beam direction

S503 — Determine transmission power control parameter set associated with transmission beam direction and determine transmission power

S105 — Transmit uplink signal

End

FIG. 9

FIG. 10

gNB or ng - eNB

| Inter Cell RRM |
| RB Control |
| Connection Mobility Cont. |
| Radio Admission Control |
| Measurement Configuration & Provision |
| Dynamic Resource Allocation (Scheduler) |

NG - RAN

AMF

| NAS Security |
| Idle State Mobility Handling |

UPF

| Mobility Anchoring |
| PDU Handling |

SMF

| UE IP address allocation |
| PDU Session Control |

5 GC

internet

FIG. 11

FIG. 12

**Enhanced Mobile Broadband**

Gigabytes in a second

3D vide, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 13

FIG. 14

# INTERNATIONAL SEARCH REPORT

International application No.

PCT/JP2021/006149

## A. CLASSIFICATION OF SUBJECT MATTER
Int. Cl. H04W52/10(2009.01)i
FI: H04W52/10

According to International Patent Classification (IPC) or to both national classification and IPC

## B. FIELDS SEARCHED

Minimum documentation searched (classification system followed by classification symbols)
Int. Cl. H04W4/00-99/00

Documentation searched other than minimum documentation to the extent that such documents are included in the fields searched
Published examined utility model applications of Japan    1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X | WO 2020/008542 A1 (NTT DOCOMO INC.) 09 January 2020, paragraphs [0014], [0015], [0023]-[0028], [0033], [0034], [0043] | 1-2, 5-7, 9 |
| Y | paragraphs [0014], [0015], [0023]-[0028], [0033], [0034], [0043] | 3-4 |
| Y | JP 2015-506130 A (NEC (CHINA) CO., LTD.) 26 February 2015, paragraphs [0066]-[0076] | 3-4 |
| Y | JP 2014-207669 A (FUJITSU LTD.) 30 October 2014, paragraphs [0076]-[0083] | 8, 10 |
| Y | JP 2020-109886 A (SHARP CORP.) 16 July 2020, paragraph [0127], fig. 5 | 8, 10 |

☐ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28.04.2021 | 18.05.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

<table>
<tr><td align="center"><b>INTERNATIONAL SEARCH REPORT</b></td><td>International application No.<br>PCT/JP2021/006149</td></tr>
</table>

**Box No. II**    **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**    **Observations where unity of invention is lacking (Continuation of item 3 of first sheet)**

This International Searching Authority found multiple inventions in this international application, as follows:

   (See extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

INTERNATIONAL SEARCH REPORT

Information on patent family members

| | | International application No. |
|---|---|---|
| | | PCT/JP2021/006149 |

| Patent Documents referred to in the Report | Publication Date | Patent Family | Publication Date |
|---|---|---|---|
| WO 2020/008542 A1 | 09.01.2020 | (Family: none) | |
| JP 2015-506130 A | 26.02.2015 | US 2014/0378150 A1 paragraphs [0066]-[0077] WO 2013/134950 A1 CN 103814609 A | |
| JP 2014-207669 A | 30.10.2014 | US 2014/0307611 A1 paragraphs [0112]-[0114] EP 2790456 A1 CN 104105103 A | |
| JP 2020-109886 A | 16.07.2020 | (Family: none) | |

Form PCT/ISA/210 (patent family annex) (January 2015)

**INTERNATIONAL SEARCH REPORT**

International application No.

PCT/JP2021/006149

(Continuation of Box No. III)

Document 1: WO 2020/008542 A1 (NTT DOCOMO INC.) 09 January 2020, paragraphs [0014], [0015], [0023]-[0028], [0033], [0034], [0043]

The claims are classified as the following two inventions.

(Invention 1) Claims 1-4, 7, 9

Document 1 indicates: that a terminal receives, from a second node, information relating to a parameter used in open loop control for a first node; that the open loop control is performed on the basis of said information; that the open loop control is uplink transmission power control for the first node, and the parameter relates to path loss between said terminal and the first node; and that the first node does not transmit a reference signal. Claims 1-2, 7, and 9 lack novelty in the light of document 1 and thus do not have a special technical feature. However, claim 3 and claim 4, which are dependent on claim 1, have the special technical feature in which said information includes information regarding the position of the terminal, and the path loss is calculated on the basis of said information. Therefore, claims 1-4, 7, and 9 are classified as invention 1.

(Invention 2) Claims 5-6

Claims 5-6 cannot be said to share the same or corresponding feature with claim 3 and claim 4 classified as invention 1.

Furthermore, claims 5-6 are dependent claims of claim 1 classified as invention 1. However, the further limitation to claim 1 set forth in these claims , i.e., performing closed loop control for the first node on the basis of a transmission power control parameter set corresponding to the control information, has little technical relevance with the feature of claim 1, i.e., receiving, from a second node, information relating to a parameter used for open loop control for the first node. Thus, claims 5-6 are not considered to be inventively linked to claim 1.

Additionally, claims 5-6 are not substantially identical to or similarly closely related to any of the claims classified as invention 1.

Therefore, claims 5-6 cannot be classified as invention 1.

Claims 5-6 are classified as invention 2 as a result of having the special technical feature of performing closed loop control for a first node on the basis of the transmission power control parameter set corresponding to the control information.

Form PCT/ISA/210 (extra sheet) (January 2015)

**INTERNATIONAL SEARCH REPORT**

International application No.

PCT/JP2021/006149

(Invention 3) Claims 8, 10

Claims 8 and 10 cannot be said to share the same or corresponding feature with claims 1-4, 7, and 9 classified as invention 1 or claims 5-6 classified as invention 2.

Additionally, claims 8 and 10 are not substantially identical to or similarly closely related to any of the claims classified as invention 1 or invention 2.

Therefore, claims 8 and 10 cannot be classified as either invention 1 or invention 2.

Claims 8 and 10 are classified as invention 3 as a result of having the special technical features in which: a terminal transmits a first signal addressed to a first node; and if a second signal is received from a second node in response to the transmission of the first signal, the transmission power of a third signal, which is transmitted to the first node in response to the receipt of the second signal, is determined on the basis of setting information regarding the transmission power of the first signal.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2020126591 A

**Non-patent literature cited in the description**

• NR; Physical layer procedure for control (Release 15). *3GPP TS 38.213 V15.9.0,* March 2020